# EUROPEAN PATENT APPLICATION

(11) **EP 2 366 973 A2**
(43) Date of publication of application: **21.09.2011**
(21) Application number: 11151586.2
(22) Date of filing: 20.01.2011
(51) Int. Cl.: G01C 21/36

(54) **MAP DISPLAY APPARATUS, MAP DISPLAY METHOD AND PROGRAM**

(30) Priority: 16.03.2010 JP 2010058630
(71) Applicant: AISIN AW CO., LTD., Anjo-shi, Aichi-ken 444-1192 (JP)
(72) Inventor: Ushida, Koichi, Anjo-shi, Aichi-ken 444-1192 (JP)
(74) Representative: Desormiere, Pierre-Louis

(57) **Abstract**

A map display apparatus (1), comprising:
a map information storage unit (25) storing map information (26);
a map image information storage unit (42) storing a map image (60) drawn based on the map information (26) stored in the map information storage unit (25);
a display unit (15) displaying a partial range of the map image (60);
a storage control unit (41) performing, when pressing of a display screen (18) of the display unit (15) is detected via a coordinate detecting unit (41), control to store in the map image information storage unit (42) a map image drawn based on map information of an area vertically and horizontally twice as large as the display screen (18), the area having a center at a position on a map where the pressing is detected first; and
a scroll control unit (41) performing follow-scrolling to move a display range of a map image displayed on the display unit (15) following movement of the pressed coordinate position detected by the coordinate detecting unit (41) based on the map image (60).

## Description

The disclosure of Japanese Patent Application No. 2010-058630 filed on March 16, 2010 including the specification, drawings and abstract is incorporated herein by reference in its entirety.

### BACKGROUND OF THE INVENTION

The present invention relates to a map display apparatus, a map display method and a program for displaying a map on a screen.

### Description of the Related Art

In the related art, various proposals are made with respect to a technique for operation of scrolling a map displayed on a screen.
For example, there are provided two, first and second VRAMs storing image data of an area larger than a display area of a display screen. Map data of a predetermined area are read from a map data storage unit to create image data, and the created image data are stored in one of the VRAMs. An area for reading a map from this VRAM corresponding to the display area of the display screen is set, a scrolling direction by a manual operation is detected, and this area for reading a map is moved according to the scrolling direction, thereby scroll-displaying the map on the display screen. There has been a map drawing method such that map data of a new area according to the scrolling direction are read from the map data storage unit to create image data, and the created image data are stored in the other VRAM. When the area for reading a map reaches a predetermined area, the VRAM from which the map is read is switched from the one VRAM to the other VRAM (see, for example, Japanese Patent Application Laid-open No. H3-10281).

However, in the map drawing method described in Japanese Patent Application Laid-open No. H3-10281, what kind of scroll operation the user performs is unclear, and thus it is always necessary to store image data of a larger area (for example, image data of a display area having a size of 3 x 3 of the display screen) than the display area of the display screen in the two, first and second VRAMs, in order to prevent discontinuity of the image. Therefore, there is a problem of difficulty in reducing a processing time for storing the image data and in decreasing necessary memory capacities of the VRAMs.

### SUMMARY OF THE INVENTION

Accordingly, the present invention is made in order to solve the above-described problem, and it is an object of the present invention to provide a map display apparatus, a map display method, and a program which allow reduction in necessary processing time for storing a map image and decrease in memory capacity for storing a map image in the case of a scroll operation from which a range of movement can be identified.

In a map display apparatus according to a first aspect, when follow-scrolling of a map image displayed following the movement of a pressed coordinate position on a display screen is performed, pressed coordinates cannot be moved to the outside of the display screen. Thus, a map image drawn based on map information of an area vertically and horizontally twice as large as the display screen, the area having a center at a position on a map where pressing is detected first, may be stored once in a map image information storage unit. Accordingly, a processing time for storing a map image needed for the follow-scrolling of a map image following the movement of a pressed position on the display screen can be reduced, and a memory capacity for storing the map image can be decreased. By storing the map image drawn based on the map information of an area vertically and horizontally twice as large as the display screen in the map image information storage unit, the follow-scrolling can be performed securely until the pressed position reaches an edge portion of the display screen irrespective of which position on the display screen is pressed first.

In a map display apparatus according to a second aspect, there is stored in the map image information storage unit a map image drawn based on map information obtained such that, to map information of an area vertically and horizontally twice as large as the display screen, the area having a center at a position on a map where the pressing is detected first, map information of an outside predetermined distance area of a peripheral portion of the area is added. Accordingly, even when the area displayed on the display screen reaches the peripheral portion of the area vertically and horizontally twice as large as the display screen, the map image can be displayed securely.

In a map display apparatus according to a third aspect, when inertial scrolling of the map image is performed based on a moving direction and a moving speed of a finger at the time when pressing of the display screen is released, a map image drawn based on map information of an area corresponding to the moving direction of the finger may be stored in the map image information storage unit. Accordingly, a memory capacity for storing map information needed for performing the inertial scrolling of the map image can be decreased. A processing time for storing the map information needed for performing the inertial scrolling of the map image is reduced, and displaying of the inertial scrolling can be performed smoothly.

In a map display method according to a fourth aspect, when follow-scrolling of a map image displayed following the movement of a pressed coordinate position on a display screen is performed, pressed coordinates cannot be moved to the outside of the display screen. Thus, a map image drawn based on map information of an area vertically and horizontally twice as large as the display screen, the area having a center at a position on a map where pressing is detected first, may be stored once in a map image information storage unit. Accordingly, a processing time for storing a map image needed for the follow-scrolling of a map image following the movement of a pressed position on the display screen, can be reduced, and a memory capacity for storing the map image can be decreased. By storing the map image drawn based on the map information of an area vertically and horizontally twice as large as the display screen in the map image information storage unit, the follow-scrolling can be performed securely until the pressed position reaches an edge portion of the display screen irrespective of which position on the display screen is pressed first.

Further, with a program according to a fifth aspect, in a computer reading this program, when follow-scrolling of a map image displayed following the movement of a pressed coordinate position on a display screen is performed, pressed coordinates cannot be moved to the outside of the display screen. Thus, a map image drawn based on map information of an area vertically and horizontally twice as large as the display screen, the area having a center at a position on a map where pressing is detected first, may be stored once in a map image information storage unit. Accordingly, in the computer, a processing time for storing a map image needed for the follow-scrolling of a map image following movement of a pressed position on the display screen can be reduced, and a memory capacity for storing the map image can be decreased. In the computer, by storing the map image drawn based on the map information of an area vertically and horizontally twice as large as the display screen in the map image information storage unit, the follow-scrolling can be performed securely until the pressed position reaches an edge portion of the display screen irrespective of which position on the display screen is pressed first.

### BRIEF DESCRIPTION OF THE DRAWINGS

FIG. 1 is a block diagram illustrating a navigation apparatus according to an embodiment;
FIG. 2 is a flowchart illustrating "touch scroll processing" to scroll a map image following a pressed coordinate position by a finger on a display screen;
FIG. 3 is a sub-flowchart illustrating sub-processing of "inertial scroll processing" of FIG. 2;
FIG. 4 is a diagram illustrating an example of a map image when a touch on the display screen is started; and
FIG. 5 is a diagram illustrating an example of an adjacent map image when a finger swipes the display screen.

### DETAILED DESCRIPTION OF THE EMBODIMENTS

Hereinafter, a map display apparatus, a map display method and a program according to the present invention will be described in detail with reference to the drawings based on an embodiment which embodies the map display apparatus, the map display method and the program in a navigation apparatus.

### [A schematic structure of the navigation apparatus]

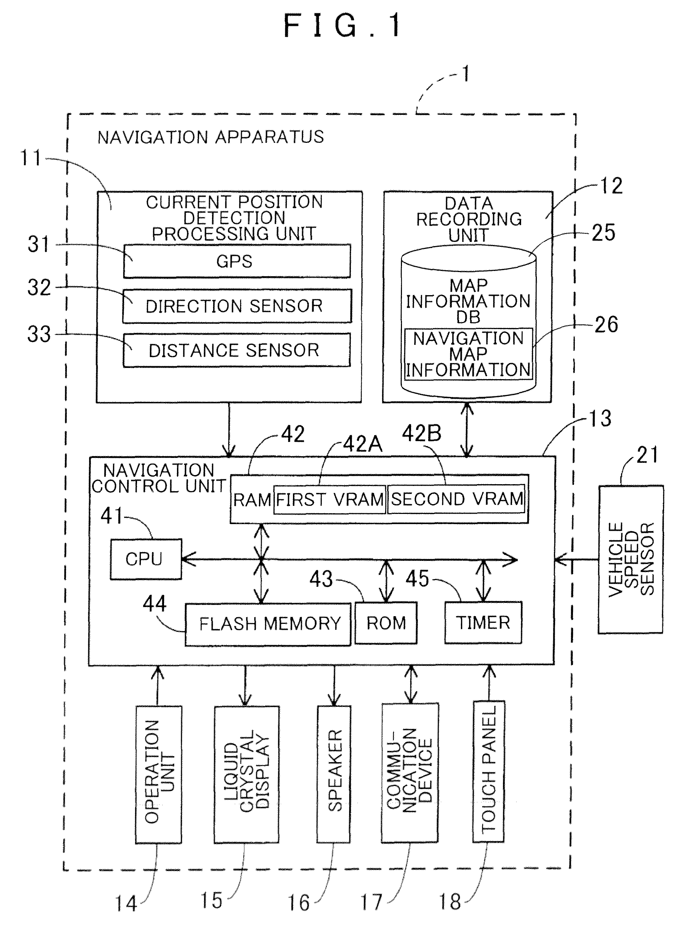

First, a schematic structure of the navigation apparatus according to the embodiment will be described based on FIG. 1. FIG. 1 is a block diagram illustrating a navigation apparatus 1 according to the embodiment.
As illustrated in FIG. 1, the navigation apparatus 1 according to the embodiment is structured from a current position detection processing unit 11 which detects the current position of a vehicle, or the like, a data recording unit 12 in which various data are recorded, a navigation control unit 13 which performs various calculation processing based on inputted information, an operation unit 14 which accepts an operation from the operator, a liquid crystal display 15 which displays information such as a map for the operator, a speaker 16 which outputs audio guidance related to route guidance or the like, a communication device 17 which performs communication with a road traffic information center, a map information distribution center, and the like (not illustrated) via a mobile phone network and/or the like, and a touch panel 18 attached on a surface of the liquid crystal display 15. A vehicle speed sensor 21 detecting the traveling speed of the vehicle is connected to the navigation control unit 13.

Respective components forming the navigation apparatus 1 will be described below. The current position detection processing unit 11 is structured from a global positioning system (GPS) 31, a direction sensor 32, a distance sensor 33, and so on, and is capable of detecting the current position of the vehicle (hereinafter referred to as "vehicle position"), a vehicle direction indicating the direction of the vesicle, a traveling distance, and the like.

The data recording unit 12 includes a hard disk (not illustrated) as an external storage device as well as a recording medium, a map information database (map information DB) 25 stored in the hard disk, and a driver (not illustrated) for reading a predetermined program or the like and writing predetermined data in the hard disk.

In the map information DB 25, navigation map information 26 used for providing traveling guidance or performing a route search by the navigation apparatus 1 is stored. Here, the navigation map information 26 is formed of various information needed for route guidance and map display, and is formed of, for example, newly constructed road information for identifying newly constructed roads, map display data for displaying a map, intersection data related to intersections, node data related to node points, link data related to roads (links), search data for searching for a route, shop data related to Point of Interest (POI) such as a shop, which is one type of facility, search data for searching for a point, and so on.

As the shop data, data of names, addresses, phone numbers, coordinate positions (for example, a latitude and a longitude) on the map, facility icons displaying the positions of facilities on the map, and the like related to POI such as hotels, amusement parks, palaces, hospitals, gas stations, parking areas, stations, airports, and ferry landings of respective regions are stored together with IDs identifying POI.
The contents of the map information DB 25 are updated by downloading updating information distributed via the communication device 17 from the map information distribution center (not-illustrated).

As illustrated in FIG. 1, the navigation control unit 13 forming the navigation system 1 includes a CPU 41 as an arithmetic device and a control device performing overall control of the navigation system 1, internal storage devices such as a RAM 42 used as a working memory when the CPU 41 performs various calculation processing and storing route data, and the like when a route is searched, a ROM 43 storing a program for control, and so on, and a flash memory 44 storing a program read from the ROM 43, as well as a timer 45 measuring a time, and so on.

In the RAM 42, a first VRAM 42A and a second VRAM 42B are provided. The storage capacities of the respective VRAMs 42A, 42B are set to be capable of storing a map image drawn based on map information of an area vertically and horizontally twice as large as a display screen of the liquid crystal display 15, as will be described later. The VRAMs are also capable of storing map information to which map information of an outside predetermined distance (for example, a distance of about 8% to 15% of each of the vertical and horizontal sizes of an area of the display screen) area is added as a margin across the entire circumference of a peripheral portion of the map image area.

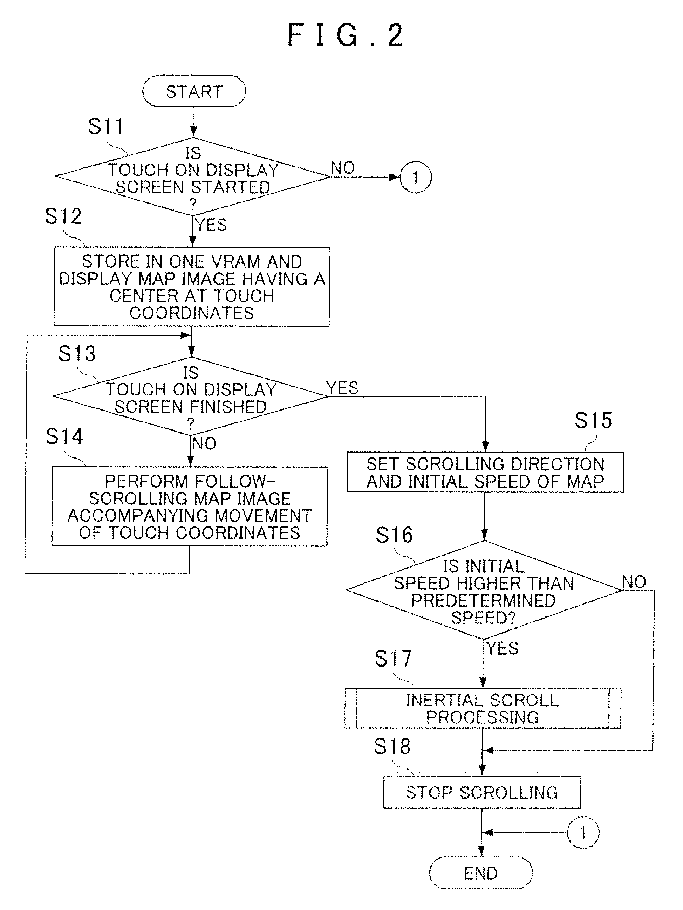

The ROM 43 also stores programs of "touch scroll processing" (see FIG. 2) to scroll the map image following the pressing with a finger on the display screen of the liquid crystal display 15, which will be described later, and so on.
Further, respective peripheral devices (actuators) of the operation unit 14, the liquid crystal display 15, the speaker 16, the communication device 17, and the touch panel 18 are connected electrically to the navigation control unit 13.

This operation unit 14 is operated when the current position at the time of starting traveling is modified to input a place of departure as a guidance start point and a destination as a guidance end point, or perform a search for information related to a facility, or the like. The operation unit 14 is structured from various keys and plural operation switches. The navigation control unit 13 performs control for carrying out various operations based on switch signals outputted by pressing switches, or the like.

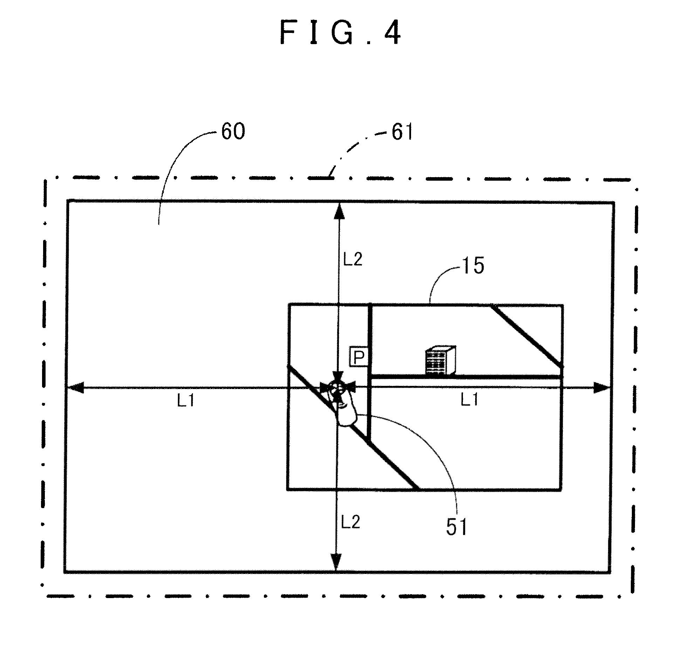

The liquid crystal display 15 displays map information of the currently traveling place, map information of the vicinity of a destination (see FIG. 4), operation guidance, an operation menu, key guidance, a recommended route from the current position to the destination, guidance information along the recommended route, traffic information, news, a weather forecast, time, an e-mail, a television program, and/or the like.

The speaker 16 outputs audio guidance, and/or the like for giving guidance on traveling along the recommended route based on an instruction from the navigation control unit 13. Here, an example of the audio guidance to be given is "turn right at the ** intersection at 200 meters ahead."

The communication device 17 is a communication unit using a mobile phone network or the like for communicating with the map information distribution center and performs transmission/reception of updating map information of the latest version, or the like to/from the map information distribution center. The communication device 17 also receives traffic information including various information such as traffic congestion information and congestion status of a service area sent from the road traffic information center, or the like, in addition to the map information distribution center.

The touch panel 18 is a transparent panel-like touch switch attached on a surface portion of the liquid crystal display 15. The touch panel 18 allows pressing of a button or a map displayed on the screen of the liquid crystal display 15 to input various instruction commands, perform follow-scrolling of the map image, and the like, as will be described later. The touch panel 18 may be an optical sensor liquid crystal-type touch panel, on which the screen of the liquid crystal display 15 is pressed directly.

### [Touch scroll processing]

Next, "touch scroll processing" which is performed by the CPU 41 of the navigation apparatus 1 structured as described above for scrolling the map image following the pressing with a finger the display screen of the liquid crystal display 15 will be described based on FIG. 2 to FIG. 5. The program illustrated by a flowchart in FIG. 2 is performed at every predetermined time (for example, at every 10 milliseconds) by the CPU 41.

As illustrated in FIG. 2, first in step (hereinafter abbreviated to S) 11, the CPU 41 performs processing to determine whether pressing of the touch panel 18 is started or not, that is, whether the touch panel 18 is pressed or not.
When pressing of the touch panel 18 is not started, that is, the touch panel 18 is not pressed (S11: NO), the CPU 41 finishes this processing.

On the other hand, when pressing of the touch panel 18 is started (S11: YES), the CPU 41 proceeds to processing of S12. In S12, the CPU 41 reads from the navigation map information 26 map information of an area vertically and horizontally twice as large as a display screen of the liquid crystal display 15, the area having a center at a pressed coordinate position (hereinafter referred to as "touch coordinates") where the touch panel 18 is pressed.

The CPU 41 stores a map image drawn based on the map information read from the navigation map information 26 in one of the first VRAM 42A and the second VRAM 42B, which is not currently used for display (which will be hereinafter described as the first VRAM 42A). Subsequently, the CPU 41 switches to the first VRAM 42A, to switch the display screen of the liquid crystal display 15 to a map image having a center at the touch coordinates and display this map image.

Here, an example of the map image having a center at the touch coordinates displayed on the liquid crystal display 15 will be described based on FIG. 4.
As illustrated in FIG. 4, when the user presses the display screen of the liquid crystal display 15 with an index finger 51, the CPU 41 reads from the navigation map information 26 map information of an area vertically and horizontally twice as large as the display screen with a horizontal length L1 and a vertical length L2, the area having a center at the touch coordinates.

The CPU 41 then stores a map image 60 drawn based on the map information read from the navigation map information 26 in the first VRAM 42A. Subsequently, the CPU 41 switches the display screen of the liquid crystal display 15 to the map image 60 having a center at the touch coordinates and displays this map image.

Next, in S13, as illustrated in FIG. 2, the CPU 41 performs processing to determine whether the pressing of the touch panel 18 is released or not, that is, the pressing of the display screen of the liquid crystal display 15 is released or not.
When it is determined that the pressing of the display screen of the liquid crystal display 15 is not released, that is, when pressing of the touch panel 18 is continued (S13: NO), the CPU 41 proceeds to processing of S14.

In S14, accompanying movement of the touch coordinates, the CPU 41 performs follow-scrolling of the map image so that a point opposing the touch coordinates moves to follow this movement. Then the CPU 41 performs processing in S13 and thereafter again.
It may be structured such that, during the follow-scrolling, after the map image is drawn first with rough image quality and displayed on the display screen, the map image is drawn once again with highly precise image quality in the same drawing range and displayed on the display screen. This enables to perform fast and highly accurate follow-scrolling.

For example, as illustrated in FIG. 4, when the display screen of the liquid crystal display 15 is with the index finger 51 and this finger is moved leftward in this state, the CPU 41 performs the follow-scrolling of the map image 60 leftward so that, accompanying the movement of the touch coordinates of the index finger 67, the map image 60 moves following the touch coordinates. When the follow-scrolling of the map image is performed following the touch coordinates in this manner, the touch position cannot be moved to the outside of the display screen. Thus, regardless of how the scrolling is performed, this scrolling takes place within the area of the map image (the area vertically and horizontally twice as large as the display screen with the horizontal length L1 and the vertical length L2, the area having a center at the initial touch coordinates) stored in the first VRAM 42A, and it is not necessary to newly draw the map image. Then the CPU 41 performs processing in S13 and thereafter again.

On the other hand, when it is determined in above-described S13 that the pressing of the display screen of the liquid crystal display 15 is released in above-described S13, that is, when it is determined that the finger comes off the touch panel 18 (S13: YES), the CPU 14 proceeds to processing of S15.

In S15, the CPU 41 sets a scrolling direction and an initial speed of the map image based on a moving direction and a moving speed of the finger at the time when the pressing of the display screen is released. Specifically, the CPU 41 detects the touch coordinates of the touch panel 18 at every predetermined time (for example, at every 20 milliseconds), and stores touch coordinates of past several times (for example, past ten times) in the RAM 42. Then the CPU 41 calculates the moving direction and the moving speed of the finger on the display screen from the touch coordinates at the time when the pressing of the touch panel 18 is released and one previous set of touch coordinates before the pressing is released, sets them as the scrolling direction and the initial speed of a scrolling speed of the map image, respectively, and stores them in the RAM 42.

Subsequently, in S16, the CPU 41 reads the initial speed from the RAM 42, and performs processing to determine whether or not this initial speed is equal to or higher than a predetermined speed, that is, whether or not the finger pressing the touch panel 18 is moved in the scrolling direction at the predetermined speed or higher. For example, when the display screen has a resolution of 800 x 600 dots, the CPU 41 determines whether or not the initial speed is equal to or higher than 300 dots/second.

When it is determined that the initial speed read from the RAM 42 is lower than the predetermined speed, that is, when it is determined that the finger pressing the touch panel 18 has not moved substantially (S16: NO), the CPU 41 proceeds to processing of S18. In S18, the CPU 41 stops scrolling of the map image, and thereafter finishes this processing.

For example, when the index finger 51 moves almost directly upward and the pressing of the touch panel 18 is released, the moving speed of the finger on the display screen becomes lower than the predetermined speed, and thus scrolling of the map image 61 stops.

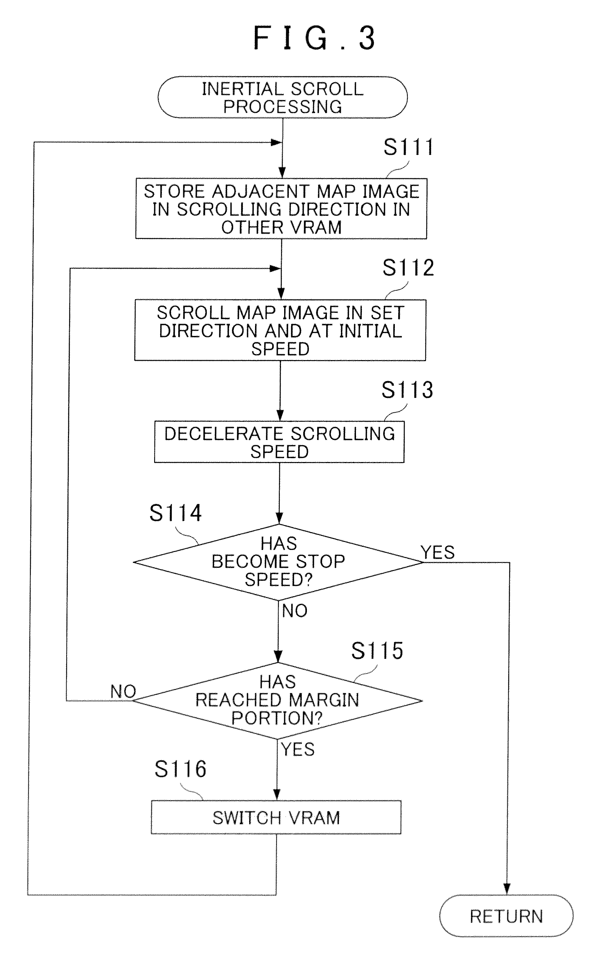

On the other hand, when it is determined that the initial speed read from the RAM 42 is equal to or higher than the predetermined speed (S16: YES), the CPU 41 proceeds to processing of S17 to perform sub-processing "inertial scroll processing" (see FIG. 3), which will be described later, and thereafter proceeds to processing of S18. In S18, the CPU 41 stops scrolling of the map image and then finishes this processing.

Here, the sub-processing "inertial scroll processing" performed by the CPU 41 in aforementioned S17 will be described based on FIG. 3.
As a margin for preventing the map image from discontinuing when the follow-scrolling changes to inertial scrolling, as illustrated in FIG. 4, preferably there is stored in the first VRAM 42A a map image 61 that is obtained such that, to the map image 60 of the area vertically and horizontally twice as large as the display screen of the liquid crystal display 15, map information of an outside predetermined distance area is added as a margin across the entire circumference of a peripheral portion of the map image area. Hereinafter, the map image drawn in the first VRAM 42A will be described as the map image 61 that includes the margin.

As illustrated in FIG. 3, first in S111, the CPU 41 reads the scrolling direction of the map image from the RAM 42, and calculates a display area of the display screen at the time when the display area of the liquid crystal display 15 reaches an edge portion of the map image drawn in the first VRAM 42A while the currently displayed map image is scrolled in the scrolling direction.

The CPU 41 then reads from the navigation map information 26 map information obtained such that, to map information of an area vertically and horizontally twice as large as the display screen, the area having a center at an intersection point between a peripheral edge portion of the calculated display area of the display screen and a straight line drawn from the touch coordinates to the scrolling direction side, map information of an outside predetermined distance area is added as a margin across the entire circumference of a peripheral portion of the area. Subsequently, the CPU 41 stores a map image drawn based on the map information read from the navigation map information 26 in one of the first VRAM 42A and the second VRAM 42B, which is not currently used for display, that is, the second VRAM 42B as an adjacent map image.

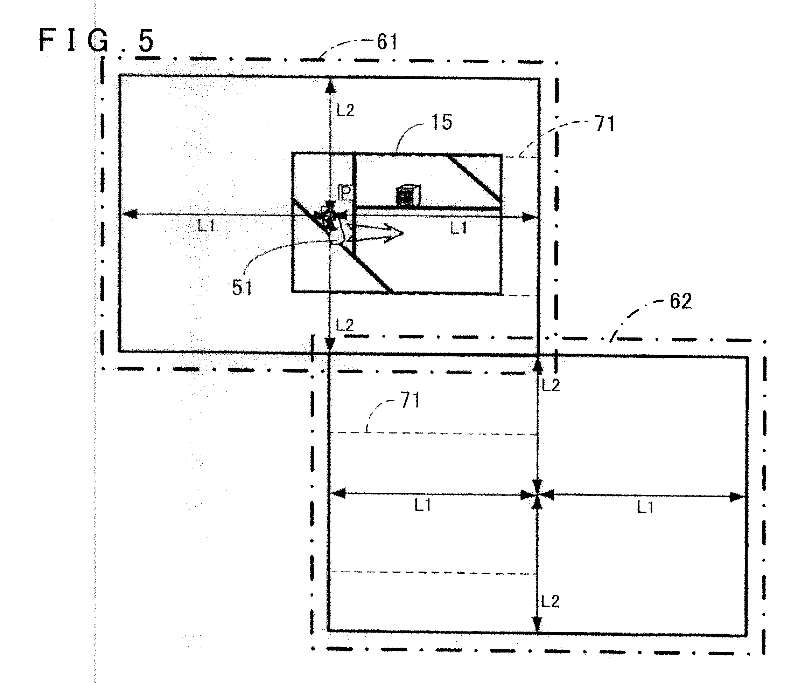

Now, an example of an adjacent map image when the index finger 51 swipes in a rightward direction on the map image 61 illustrated in FIG. 4 will be described based on FIG. 5.
As illustrated in FIG. 5, when the index finger 51 swipes in the rightward direction on the map image 61, the CPU 41 calculates a moved display area 71 of the display screen at the time when the display area of the liquid crystal displays 15 reaches a right edge portion of the area vertically and horizontally twice as large as the display screen, the area having a center at the touch coordinates in the map image 61.

Then the CPU 41 reads from the navigation map information 26 map information obtained by adding a margin to map information of an area vertically and horizontally twice as large as the display screen with the horizontal length L1 and the vertical length L2, the area having a center at an intersection point between the moved display area 71 and a straight line drawn in the scrolling direction, that is, the rightward direction from the touch coordinates, the intersection point being, in other words, a middle point of a right side of the moved display area 71. Subsequently, the CPU 41 stores a map image drawn based on the map information read from the navigation map information 26 as an adjacent map image 62 in the second VRAM 42B.

Next, in S112, as illustrated in FIG. 3, the CPU 41 reads the scrolling direction and the initial speed of the map image from the RAM 42, and performs the inertial scrolling of the map image at the initial speed as a scrolling speed in the read scrolling direction for a predetermined time (for example, 100 milliseconds).

Then, in S113, the CPU 41 reads the initial speed from the RAM 42, reduces a predetermined speed (for example, 30 dots/second) from the initial speed, and stores the result again as the initial speed in the RAM 42. That is, the CPU 41 decelerates the scrolling speed of the map image.
Subsequently, in S114, the CPU 41 reads the scrolling speed from the RAM 42, and performs processing to determine whether the scrolling speed has become a stop speed or not. Specifically, the CPU 41 performs processing to determine whether the initial speed has become equal to or lower than 0 dot/second.

When the scrolling speed has become the stop speed (S114: YES), the CPU 41 finishes the sub-processing, returns to the main flowchart, and proceeds to processing of S18.
On the other hand, when the scrolling speed has not become the stop speed (S114: NO), the CPU 41 proceeds to processing of S115.

In S115, the CPU 41 performs processing to determine whether or not the range of the map displayed on the display screen of the liquid crystal display 15 has reached an outside area of the map image stored in the first VRAM 42A, that is, whether or not the display area of the display screen has reached the margin of the map image.
When the display area of the display screen of the liquid crystal display 15 has not reached the margin of the map image (S115: NO), the CPU 41 performs processing of S112 and thereafter again.

On the other hand, when the display area of the display screen of the liquid crystal display 15 has reached the margin of the map image (S115: YES), the CPU 41 proceeds to processing of S116. In S116, the CPU 41 switches to the second VRAM 42B and displays the drawing range corresponding to the adjacent map image, and then performs processing of S111 and thereafter again.

For example, as illustrated in FIG. 5, when the display screen of the liquid crystal display 15 has gone outside the moved display area 71, the CPU 41 switches from the map image 61 to the adjacent map image 62, displays the corresponding moved display area 71 of the adjacent map image 62, and then performs processing of S111 and thereafter again.

As described in detail above, in the navigation apparatus 1 according to the embodiment, when the CPU 41 performs the follow-scrolling of the map image that is displayed following the movement of the touch coordinates, the CPU 41 may store, once in one of the first VRAM 42A and the second RAM 42B, which is not currently used for display, a map image drawn based on map information of an area vertically and horizontally twice as large as the display screen, the area having a center at a position on the map where pressing is detected first.

Accordingly, a processing time for storing a map image needed for the follow-scrolling can be reduced, and the memory capacities of the first VRAM 42A and the second VRAM 42B storing a map image can be decreased. Since the map image stored in the first VRAM 42A or the second VRAM 42B includes a map image drawn based on the map information of an area vertically and horizontally twice as large as the display screen, the follow-scrolling can be performed securely until the touch coordinates reach an edge portion of the display screen irrespective of which position on the display screen is pressed first.

When the inertial scrolling of the map image is performed based on the moving direction and the moving speed of the finger at the time when pressing of the display screen is released, there is stored as an adjacent map image in one of the first VRAM 42A and the second VRAM 42B, which is not currently used for display, a map image drawn based on map information obtained such that, to map information of an area vertically and horizontally twice as large as the display screen, the area having a center at an intersection point between a peripheral edge portion of a drawing range of the display screen at the time when the display area of the liquid crystal display 15 reaches an edge portion of an area vertically and horizontally twice as large as the display screen and a straight line drawn from the touch coordinates to the scrolling direction side, map information of an outside predetermined distance area is added as a margin across the entire circumference of a peripheral portion of the area.

Accordingly, when the inertial scrolling of a map image is performed based on the moving direction and the moving speed of the finger at the time when pressing of the display screen is released, displaying of the inertial scrolling can be performed smoothly by switching to and displaying the adjacent map image when the drawing range of the display screen reaches the margin of the map image.

It should be noted that the present invention is not limited to the above-described embodiment, and as a matter of course, various improvements and modifications can be made within the range not departing from the spirit of the present invention.

(A) For example, the CPU 31 may be configured to store in above-described S12 the map image drawn based on map information of an area vertically and horizontally twice as large as the display screen of the liquid crystal display 15, the area having a center at the touch coordinates, in one of the first VRAM 42A and the second VRAM 42B, which is not currently used for display. This allows further reduction in processing time for storing a map image needed for performing the follow-scrolling.

(B) For example, it is also possible to provide three or more storage areas of VRAM in the RAM 42. This allows more smooth display of the inertial scrolling by sequentially switching to an adjacent map image for display when the display area of the display screen reaches the margin of a map image when the inertial scrolling of the map image is performed.

## Claims

1. A map display apparatus (1), comprising:
a map information storage unit (25) storing map information (26);
a map image information storage unit (42) storing a map image (60) drawn based on the map information (26) stored in the map information storage unit (25);
a display unit (15) displaying a partial range of the map image (60) stored in the map image information storage unit (42);
a coordinate detecting unit (41) detecting a pressed coordinate position where a display screen (18) of the display unit (15) is pressed;
a storage control unit (41) performing, when pressing of the display screen (18) is detected via the coordinate detecting unit (41), control to store in the map image information storage unit (42) a map image drawn based on map information of an area vertically and horizontally twice as large as the display screen (18), the area having a center at a position on a map where the pressing is detected first; and
a scroll control unit (41) performing follow-scrolling to move a display range of a map image displayed on the display unit (15) following movement of the pressed coordinate position detected by the coordinate detecting unit (41) based on the map image (60) stored in the map image information storage unit (42).

2. The map display apparatus according to claim 1, wherein
the storage control unit (41) performs, when pressing of the display screen (15) is detected via the coordinate detecting unit (41), control to store in the map image information storage unit (42) a map image drawn based on map information obtained such that, to map information of an area vertically and horizontally twice as large as the display screen, the area having a center at a position on a map where the pressing is detected first, map information of an outside predetermined distance area of a peripheral portion of the area is added.

3. The map display apparatus according to claim 1 or 2, wherein
the scroll control unit (41) performs one of the follow-scrolling and inertial scrolling to scroll the display range of the map image displayed on the display unit (15) based on a moving direction and a moving speed of a finger at a time when pressing of the display screen is released, and
when the inertial scrolling of the map image is performed, the storage control unit (41) performs control to store in the map image information storage unit (42) a map image drawn based on map information of an area corresponding to the moving direction of the finger.

4. A map display method, comprising the steps of:
displaying on a display device (15) a partial range of a map image (60) stored in a map image information storage unit (42);
detecting a pressed coordinate position where a display screen (18) of the display device (15) is pressed;
performing, when pressing of the display screen (18) is detected in the coordinate detection step, control to read from the map information storage unit (25) map information of an area vertically and horizontally twice as large as the display screen, the area having a center at a position on a map where the pressing is detected first, and store a map image drawn based on the map information in the map image information storage unit (42); and
performing follow-scrolling to move a display range of a map image displayed on the display device (15) following movement of the pressed coordinate position detected in the coordinate detection step based on the map image stored in the storage control step.

5. A program causing a computer to execute the steps of:
displaying on a display device a partial range of a map image stored in the map image information storage unit (42);
detecting a pressed coordinate position where the display screen (18) of the display device (15) is pressed;
performing, when pressing of the display screen (18) is detected in the coordinate detection step, control to read from the map information storage unit (25) map information of an area vertically and horizontally twice as large as the display screen (18), the area having a center at a position on a map where the pressing is detected first, and store a map image drawn based on the map information in the map image information storage unit (42); and
performing follow-scrolling to move a display range of a map image displayed on the display device (15) following movement of the pressed coordinate position detected in the coordinate detection step based on the map image stored in the storage control step.
